# EUROPÄISCHE PATENTANMELDUNG

(11) **EP 0 563 730 A2**
(43) Veröffentlichungstag der Anmeldung: **06.10.1993**
(21) Anmeldenummer: 93104652.8
(22) Anmeldetag: 22.03.1993
(51) Int. Cl.: C07F 9/40, C08F 230/02, C08F 220/04, C08F 220/54, C11D 3/37, C02F 5/14

(54) **Alkenylaminoalkylenphosphonsäureester und Verfahren zur Herstellung von Copolymeren bestehend aus Alkenylaminoalkylenphosphonaten und ethylenisch ungesättigten Verbindungen**

(30) Priorität: 28.03.1992 DE 4210297
(71) Anmelder: HOECHST AKTIENGESELLSCHAFT, D-65926 Frankfurt am Main (DE)
(72) Erfinder: Krull, Matthias, Dr., W-6232 Bad Soden/Taunus (DE); Naumann, Christoph, Dr., W-6272 Niedernhausen (DE)

(57) **Zusammenfassung**

Die vorliegende Erfindung betrifft Alkenylaminoalkylenphosphonsäureester der Formel (1) 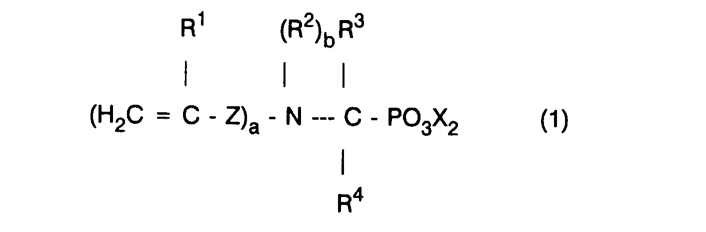 wobei R¹ bis R⁵, Z, X, a und b die in der Beschreibung genannte Bedeutung besitzen, ausgenommen den Verbindungen der Formel (H₂C=CH-CH₂)₂N-CH[PO₃(C₂H₅)₂]₂ und (H₂C=CH-CH₂)₂N-CHR⁴-PO₃X₂ sowie Verfahren zu deren Herstellung.

Ebenfalls Gegenstand der Erfindung ist ein Verfahren zur Herstellung von Copolymeren bestehend aus 0,1 - 99 Gew.-%, bevorzugt 1 - 50 Gew.-%, mindestens einer Monomer-Einheit der Formel (2) 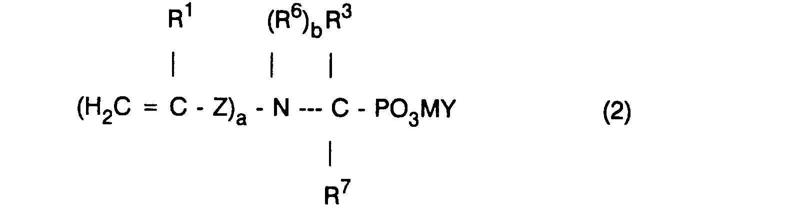
wobei R⁶, R⁷, M und Y die in der Beschreibung genannte Bedeutung besitzen und 99,9 - 0,1 Gew.-%, bevorzugt 99 - 50 Gew.-% mindestens einer Monomer-Einheit aus der Gruppe der ethylenisch ungesättigten Carbonsäuren, Sulfonsäuren und deren Derivaten sowie anderen ethylenisch ungesättigten Verbindungen und Verwendung der Copolymeren als Steinverhinderer, Komplex-/Sequestriermittel und Builder bzw. Cobuilder in Waschmitteln.

## Beschreibung

Copolymere aus ungesättigten Phosphonsäuren und ungesättigten Mono- und Dicarbonsäuren werden in US-A-5 126 418 als Erdalkali- und Schwermetall-Komplexbildner, als Steinverhinderer in der Erdölindustrie und als Builder, Cobuilder und Peroxidstabilisatoren sowie als Granulierhilfsmittel für Bleichaktivatoren in Waschmitteln vorgeschlagen. Sie vereinigen die Eigenschaften von Polycarboxylaten und Phosphonaten in sich.

Aus DE-A-3 926 059 sind phosphonomethylierte Polyvinylamine bekannt, die durch Phosphonomethylierung von Polymerisaten, die N-Vinylamidgruppen oder Vinylamingruppen enthalten, hergestellt werden und als Zusatz zu Waschmitteln und als Wasserbehandlungsmittel (Sequestriermittel) Verwendung finden.

Die JP-OS-54/135 724 beschreibt ein Verfahren zur Herstellung von Aminomethylenphosphonsäureestern sowie deren saure Hydrolyse, z.B. die Synthese von N-Diallylaminomethylendiphosphonsäuretetraethylester und der entsprechenden Säure.

In JP-OS-50/72 987 ist die Homo- und Copolymerisation von Diallylaminomethylenphosphonsäuren mit ethylenisch ungesättigten Monomeren zu hochmolekularen (Co)polymeren beschrieben. Bei der Polymerisation von Diallylammoniumsalzen entstehen Pipderidiniumgruppen enthaltende, kaum verzweigte Polymere (Lancaster et al., Polym. Lett. 1976, 14, 549).

(Co)polymerisierbare Phosphonsäurederivate sind z.B. durch Mannich-Reaktion von (Di)allylamin mit Aldehyden und phosphoriger Säure in stark mineralsaurer Lösung (K. Moedritzer, R.R. Irani; J. Org. Chem. 1966, 31, 1603) zugänglich. Dabei wird das Amin mit Formaldehyd und phosphoriger Säure in Gegenwart mindestens äquimolarer Mengen einer Mineralsäure zur Reaktion gebracht. Bei der anschließenden Neutralisierung der Reaktionslösung fallen entsprechend mindestens äquimolare Mengen Salze an, die für bestimmte Anwendungen, wie z.B. die Steinverhinderung in Kuhlwässern sowie für moderne Waschmittel durch aufwendige Operationen abgetrennt und schließlich deponiert werden müssen. Bei der Verwendung von Salzsäure ist weiterhin die als Nebenreaktion auftretende Bildung von cancerogenen halogenierten Dimethylethern von großem Nachteil.

Es bestand daher die Notwendigkeit, ein Verfahren zur Herstellung von (co)polymerisierbaren Alkenylaminoalkylenphosphonsäurederivaten zur Verfügung zu stellen, bei dem keine oder nur geringe Mengen anorganischer Salze anfallen und bei dem die Bildung von cancerogenen halogenierten Dimethylethern unterbleibt.

Überraschenderweise wurde nun gefunden, daß sich die Ester der Alkenylaminoalkylenphosphonsäuren herstellen lassen, ohne daß die oben genannten Nachteile auftreten. Diese Ester können auf geeignete Art und Weise mit ethylenisch ungesättigten Verbindungen copolymerisiert werden.

Gegenstand der Erfindung sind Alkenylaminoalkylenphosphonsäureester der Formel 1 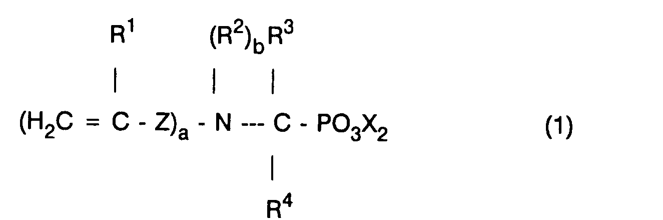
worin
R¹ = Wasserstoff oder Methyl,
R² = Wasserstoff, C₁-C₂₂-Alkyl, bevorzugt Cᵢ-C₆-Alkyl, C₃-C₆-Alkenyl, bevorzugt Propenyl, Aryl, bevorzugt Phenyl oder eine Gruppe der Formeln -C(R3)(R4)-P03X2 und - C(O)R⁵,
R³ = Wasserstoff, C1-C22-Alkyl, bevorzugt C₁-C₆-Alkyl oder Aryl, bevorzugt Phenyl,
R⁴ = Wasserstoff, C1-C22-Alkyl, bevorzugt C₁-C₆-Alkyl, Aryl, bevorzugt Phenyl oder eine Gruppe der Formel -P0₃X₂,
R⁵ = C1-C22-Alkyl, bevorzugt C1-C4-Alkyl oder Aryl, bevorzugt Phenyl,
Z = C₁-C₃-Alkyl,
a = 1 oder 2, b = O oder 1, a + b = 2 und
X = C1-C4-Alkyl oder Aryl, bevorzugt Phenyl,

ausgenommen den Verbindungen der Formeln
(H₂C=CH-CH₂)₂N-CH[PO₃(C₂H₅)₂]₂ und (H₂C=CH-CH₂)₂N-CHR⁴-PO₃X₂.

Ebenfalls Gegenstand der Erfindung ist ein Verfahren zur Herstellung von Copolymeren bestehend aus 0,1 - 99,9 Gew.-%, bevorzugt 1 - 50 Gew.-%, mindestens einer Monomer-Einheit der Formel 2 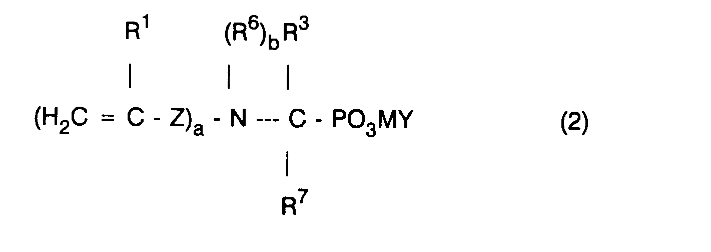
worin
R1 = Wasserstoff oder Methyl,
R⁶ = Wasserstoff, C₁-C₂₂-Alkyl, bevorzugt Cᵢ-C₆-Alkyl, C₃-C₆-Alkenyl, bevorzugt Propenyl, Aryl, bevorzugt Phenyl oder eine Gruppe der Formeln -C(R³)(R⁴)-PO₃MY und - C(O)R⁵,
R³ = Wasserstoff, C₁-C₂₂-Alkyl, bevorzugt C₁-C₆-Alkyl oder Aryl, bevorzugt Phenyl,
R7 = Wasserstoff, C₁-C₂₂ - Alkyl, bevorzugt C₁-C₆-Alkyl, Aryl, bevorzugt Phenyl oder eine Gruppe der Formel -P03MY,
R⁵ = C₁-C₂₂-Alkyl, bevorzugt C₁-C₄-Alkyl oder Aryl, bevorzugt Phenyl,
Z = C₁-C₃-Alkyl,
a = 1 oder 2, b = 0 oder 1, a + b = 2 ,
Y = Wasserstoff, C₁-C₄-Alkyl oder Aryl, bevorzugt Phenyl und
M = unabhängig voneinander Wasserstoff oder ein Kation, vorzugsweise Natrium, Kalium, oder Ammonium bedeuten

und
99,9 - 0,1 Gew.-%, bevorzugt 99 - 50 Gew.-% mindestens einer Monomer-Einheit aus der Gruppe der ethylenisch ungesättigten Carbonsäuren, Sulfonsäuren und deren Derivaten sowie anderen ethylenisch ungesättigten Verbindungen, dadurch gekennzeichnet, daß man Alkenylaminoalkylenphosphonsäureester der Formel 1 und Monomere aus der Gruppe der ethylenisch ungesättigten Carbonsäuren, Sulfonsäuren und deren Derivaten sowie anderer ethylenisch ungesättigter Verbindungen in wäßrigem Medium oder organischem Medium bei einem pH-Wert kleiner 5 polymerisiert und gegebenenfalls die verbleibenden Phosphonsäureestergruppen der erhaltenen Copolymere hydrolysiert.

Die Herstellung der erfindungsgemäßen Alkenylaminoalkylenphosphonsäureester der Formel 1 wird nachfolgend beschrieben.

Handelt es sich bei den Verbindungen der Formel 1 um Monophosphonsäureester (R⁴ ungleich P0₃X₂), werden diese durch Umsetzung eines Aldehyds oder Ketons der Formel R³⁻C(O)-R⁴, bevorzugt Formaldehyd, einem Diester der phosphorigen Säure und einem Amin der Formel 3 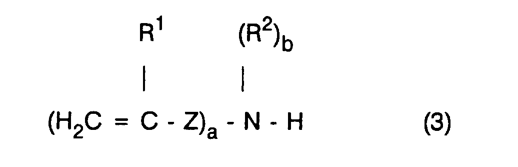
wobei R¹, R², Z, a und b die vorstehend angegebene Bedeutung besitzen, erhalten. Als Diester der phosphorigen Säure sind beispielsweise Dialkylester mit C₁-C₅-Alkyl, wie Dimethylester, Diethylester, Diphenylester oder Alkylarylester geeignet.

Bei der Herstellung der Monophosphonsäureester der Formel 1 (R⁴ ungleich P0₃X₂) werden üblicherweise der Diester der phosphorigen Säure und der Aldehyd oder das Keton der Formel R³⁻C(O)-R⁴ vorgelegt und das entsprechende Amin so zugegeben, daß die exotherme Umsetzung kontrolliert verläuft. Es können aber auch der Diester der phosphorigen Säure und das Amin vorgelegt und der Aldehyd oder das Keton der Formel R³⁻C(O)-R⁴ langsam zugegeben werden.

Es hat sich gezeigt, daß 0,5 bis 1,5 Mol, bevorzugt 0,8 bis 1,2 Mol Aldehyd oder Keton der Formel R³⁻ C(O)-R⁴ und 0,5 bis 1,5 Mol, bevorzugt 0,8 bis 1,2 Mol Diester der phosphorigen Säure pro Mol des sekundären Amins miteinander umgesetzt werden. Besonders bevorzugt werden die einzelnen Komponenten in äquimolaren Mengen miteinander umgesetzt.

Bei primären Aminen werden entsprechend doppelte Mengen Aldehyd oder Keton der Formel R³⁻C(O)-R⁴ und Diester der phosphorigen Säure eingesetzt. Die Reaktionstemperaturen liegen im Bereich von 20 bis 200 _{°} C, bevorzugt zwischen 50 und 150°C.

Handelt es sich bei den Verbindungen der Formel 1 um 1,1-Diphosphonsäureester (R⁴ gleich -P0₃X₂), werden diese durch Umsetzung von Diestern der phosphorigen Säure, einem Alkylester der ortho-Ameisensäure und einem Amin der Formel 3 erhalten. Als Alkylester der ortho-Ameisensäure sind C1-C4-Alkylester, wie ortho-Ameisensäureethylester geeignet.

Bei der Herstellung dieser 1,1-Diphosphonsäureester werden vorteilhafterweise 0,5 bis 2 Mol, bevorzugt 1,0 bis 1,3 Mol Alkylester der ortho-Ameisensäure und 1,5 bis 3,0 Mol, bevorzugt 2,0 bis 2,5 Mol Diester der phosphorigen Säure pro Mol des betreffenden primären oder sekundären Amins bei Temperaturen im Bereich von 50 bis 150°C unter Abdestillieren des entstehenden Alkohols umgesetzt, wobei üblicherweise die kontrollierte Zugabe des Amins zu dem Gemisch aus Diester und Alkylester der ortho-Ameisensäure erfolgt. Besonders bevorzugt erfolgt die Umsetzung der einzelnen Komponenten im Molverhältnis 1:2:1.

Die genannten Verfahren zur Herstellung von Verbindungen der Formel 1 besitzen den Vorteil, daß keine anorganischen Salze, wie Kochsalz anfallen und die Bildung von cancerogenen halogenierten Dimethylethern unterbleibt.

Als Verbindungen der Formel 1 seien insbesondere Allylaminobis(methylenphosphonsäure)-tetraethyle- ster, Methallylaminobis(methylenphosphonsäure)-tetraethylester, Diallylamino-methylen-phosphonsäure-dimethylester, Diallylamino-methylenphosphonsäure-diethylester, Diallylaminomethan-1,1-diphosphonsäure-te- traethylester, Diallylaminomethan-1,1 - diphosphonsäure-tetramethylester, Diallylaminomethan-1,1- diphosphonsäure-tetrapropylester und N-Methyl-allylamino-methan-1,1-diphosphonsäure-tetraethylester genannt.

Die salzfreien Verbindungen der Formel 1 können ohne weitere Reinigung oder Trocknung zur Herstellung der vorstehend genannten Copolymeren, bestehend aus Monomeren der Formel 2 und Monomeren aus der Gruppe der ethylenisch ungesättigten Carbonsäuren, Sulfonsäuren und deren Derivaten sowie anderen ethylenisch ungesättigten Verbindungen verwendet werden.

Ist gegebenenfalls eine Trocknung erforderlich, so kann das vorhandene Wasser durch geeignete Verfahren, wie Destillation oder den Zusatz von Trocknungsmitteln entfernt werden.

Als Ausgangsstoffe zur Herstellung von Copolymeren nach dem erfindungsgemäßen Verfahren dienen neue und bekannte Alkenylaminoalkylenphosphonsäureester. Zu den bekannten Verbindungen zählen Diallylaminomethan-1,1-diphosphonsäure-tetraethylester und die in der noch nicht offengelegten deutschen Patentanmeldung mit dem Aktenzeichen P 4100760.3 genannten Diallylaminomethan-phosphonsäurediester.

Geeignete Comonomere sind ethylenisch ungesättigte Carbonsäuren und deren Derivate, beispielsweise Acrylsäure, Methacrylsäure, Crotonsäure, Maleinsäure(anhydrid), Fumarsäure, Itakonsäure(anhydrid), Acrylsäuremethylester, Acrylsäureethylester, Methacrylsäuremethylester, Methacrylsäurebutylester, Dimethylaminoethylacrylat, Dimethylaminoethylmethacrylat, Maleinsäuremonoethylester, Maleinsäurediethylester, Hydroxyethylacrylat, Hydroxypropylacrylat, Hydroxyethylmethacrylat, Hydroxypropylmethacrylat, Methacrylamidopropyldimethylammoniumchlorid, Dimethylaminopropylacrylamid, Acrylnitril und Methacrylnitril. Weiterhin geeignet sind ethylenisch ungesättigte Sulfonsäuren wie Vinylsulfonsäure, Allylsulfonsäure, Methallylsulfonsäure, Sryrolsulfonsäure, Acrylsäure-(3-sulfopropyl)ester, Methacrylsäure-(3sulfopropyl)ester und 2-Acrylamido-2-methylpropansulfonsäure.

Außerdem eignen sich auch neutrale ungesättigte Verbindungen, wie N-Vinylacetamid, N-Vinylpyrrolidon, N-Vinylcaprolactam, N-Vinylimidazol, Vinylacetat, Vinylpropionat, Vinylbutyrat, Styrol, Olefine mit 2 bis 10 C-Atomen wie Ethylen, Propylen, Isobutylen, Hexen, Diisobuten und Vinylalkylether, wie Methylvinylether, Ethylvinylether, n-Butylvinylether, Isobutvlvinylether, Herylvinylether und Octylvinylether.

Die vorstehend genannten Ausgangsstoffe können als Einzelstoffe oder in Form von Mischungen eingesetzt werden.

Die Herstellung der Copolymere kann nach Verfahren der Substanz-, Lösungs-, Fällungs-, Suspensions-oder (inversen) Emulsionspolymerisation erfolgen. Bevorzugtes Herstellungsverfahren ist die Lösungspolymerisation, auf die nachfolgend näher eingegangen wird.

Die Copolymerisation erfolgt üblicherweise in Gegenwart von unter Polymerisationsbedingungen radikalbildenden Initiatoren, z.B. in Gegenwart von Peroxiden, Hydroperoxiden, Persulfaten, Azoverbindungen oder sogenannten Redoxkatalysatoren.

Als Lösungsmittel eignen sich wäßrige Medien und organische Medien. Dabei bestehen die wäßrigen Medien aus Gemischen von Wasser und wassermischbaren organischen Lösungsmitteln, wie Alkoholen, cyclischen Estern oder vorteilhafterweise nur Wasser. Die organischen Medien bestehen aus wassermischbaren oder nicht-wassermischbaren organischen Lösungsmitteln, wozu auch aromatische Kohlenwasserstoffe, wie Toluol und Xylol und Paraffine zählen. Die Lösungspolymerisation wird bei einer Gesamtmonomerkonzentration von 1 bis 80 Gew.-%, vorzugsweise 10 bis 60 Gew.-% durchgeführt. Die Temperaturen liegen zwischen 0 und 120°C, vorzugsweise zwischen 10 und 100°C.

Die Ausgangsstoffe können in dem Lösungsmittel vorgelegt werden, getrennt oder gemeinsam in das Lösungsmittel eingebracht werden. Die Zugabe des gegebenenfalls in einem geeigneten Lösungsmittel gelösten Radikalkettenstarters kann gleichzeitig mit oder nach der Zugabe der Ausgangsstoffe erfolgen. Um die Löslichkeit der eingesetzten Alkenylaminoalkylenphosphonsäureester in Wasser zu erhöhen, ist es empfehlenswert, kurzkettige aliphatische Alkohole, wie Ethanol oder Isopropanol zuzusetzen. Zusätzlich kann es, um die Löslichkeit der Verbindung der Formel I zu verbessern und ferner eine Oxidation zu verhindern, vorteilhaft sein, das wäßrige Medium vor der eigentlichen Polymerisation mit Säuren, bevorzugt in äquimolaren Mengen, zu versetzen, wobei der pH-Wert des wäßrigen Mediums kleiner 5, bevorzugt kleiner 3 sein soll. Geeignete Säuren sind Mineralsäuren, wie Salzsäure, Schwefelsäure, Phosphorsäure sowie organische Säuren, wie Alkancarbonsäuren, z.B. Ameisensäure und Essigsäure und aromatische Carbon- bzw. Sulfonsäuren, z.B. Benzoesäure und p-Toluolsulfonsäure.

Sollen Copolymere mit freien Phosphonsäuregruppen der Formel -P0₃H₂ erhalten werden, so kann die Copolymerisation in stark saurer Lösung unter Zusatz der vorstehend genannten Säuren durchgeführt werden oder die Phosphonsäureestergruppen der nach dem erfindinngsgemäßen Verfahren erhaltenen Copolymere werden in stark saurer Lösung, bei einem pH-Wert kleiner 3 durch Erhitzen hydrolysiert. In einer speziellen Variante des Verfahrens kann die Hydrolyse der Phosphonsäureestergruppen durch Behandeln der Copolymeren mit freien Phosphonsäuregruppen enthaltenden Copolymeren unter Zusatz von Wasser und Abdestillieren des sich bildenden Alkohols erfolgen.

Neben den vorstehend genannten Säuren können die als Ausgangsstoffe eingesetzten ethylenisch ungesättigten Carbonsäuren bzw. Sulfonsäuren ebenfalls als Protonendonatoren dienen, so daß gegebenenfalls auf den Zusatz von Säuren verzichtet werden kann. Dabei wurde gefunden, daß unter den sauren Reaktionsbedingungen parallel zur Polymerisation eine Hydrolyse der Alkenylaminoalkylenphosphonsäureester stafflindet, wobei die Bildung von Ethylchlorid ausgeschlossen werden kann. Bevorzugte Monomere bei dieser Umsetzung sind Acrylsäure, Methacrylsäure, Maleinsäure und 2-Acrylamido-2-methylpropansulfonsäure.

Bei der Copolymerisation von Phosphonsäureestern der Formel 1 mit saure Gruppen tragenden Comonomeren in wäßriger Lösung werden die Estergruppen, wie ³¹P-NMR- spektroskopisch gezeigt werden kann, während der Polymerisation hydrolysiert. So zeigt das 31 P-NMR-Spektrum eines Copolymers aus Acrylsäure und Diallylaminomethan-1,1-diphosphonsäure-tetraethylester (Beispiel 8) ein breites Signal zwischen 8 und 9 ppm, während der eingesetzte Diallylamino-methan-1,1-diphosphonsäure-tetraethylester ein wesentlich schärferes Signal bei 19,8 ppm zeigt.

Das 31 P-NMR-Spektrum der zu Vergleichszwecken hergestellten Pyrrolidin-1,1-methandiphosphonsäure (Vergleichsbeispiel 2), die ein Strukturelement des Polymers nach Beispiel 4 darstellt, zeigt ebenfalls ein Signal bei 8,25 ppm.

Nach dem erfindungsgemäßen Verfahren lassen sich Copolymere durch Umsetzung von öllöslichen Alkenylaminoalkylenphosphonsäureestern mit oleophilen ethylenisch ungesättigten Comonomeren in organischen Lösungsmitteln in Gegenwart von Radikalkettenstartern, wie AIBN oder organischen Peroxiden und anschließende Hydrolyse der so erhaltenen Copolymeren durch Zusatz von Mineralsäuren bei einem pH-Wert kleiner 3 herstellen.

Das Molekulargewicht der hergestellten Copolymeren wird durch die Verwendung bestimmt, unterliegt im Prinzip aber keinen Beschränkungen. Bevorzugt werden Copolymerisate mit niederem und mittlerem Molekulargewicht im Bereich von 1.000 bis 500.000 hergestellt. Dies kann auch durch den Zusatz von 0,001 bis 30 Gew.-% Regler, wie Thioglykolsäure, Ethanthiol, Dodecanthiol, phosphorige Säure, hypophosphorige Säure, Natriumhydrogensulfit oder wasserlösliche Salze von Übergangsmetallen, wie Kupfer, Eisen, Mangan und Nickel zum Reaktionsansatz vor oder während der Katalysatorzugabe erreicht werden. Die bevorzugte Eigenviskosität K (Bestimmung nach Ubbelohde) der Polymere liegt z.B. für die Verwendung als Steinverhinderer zwischen 10 und 100, insbesondere zwischen 10 und 50.

Die nach dem erfindinngsgemäßen Verfahren hergestellten Copolymere besitzen eine breite Verwendung und lassen sich in vielen Bereichen unter Ausnutzung ihrer vorteilhaften Eigenschaften einsetzen. Bevorzugt werden sie als Steinverhinderer, z.B. in der Maschinenreinigung, Flaschenreinigung, Dampfproduktion, Kühlwasserbehandlung und bei der Erdölförderung, als Komplexier- und/oder Sequestiermittel, z.B. bei der Wasseraufbereitung, bei der Lederherstellung und in der Textil- und Papierbleiche und als Builder und Cobuilder in Waschmitteln, eingesetzt.

### Beispiele

Die Prozentangaben sind, sofern nicht anders angegeben, als Gewichtsprozente zu verstehen. Das in den Beispielen verwendete Wasser ist entionisiert. Die Eigenviskositätswerte K wurden nach Ubbelohde bei 25°C in Wasser bei einer Polymerkonzentration von 5 Gew.-% bestimmt. ³¹P-NMR-Spektren wurden mit einem 121-MHz-Spektrometer in D₂0 mit 3-(Trimethylsilyl)-propionsäure-d₄-Natriumsalz bzw. in CDGl₃ mit Tetramethylsilan als innerem Standard registriert.

Die Polymerisationen wurden in 1 | 5- Halskolben mit plangeschliffenem Deckel durchgeführt. Die Kolben sind ausgestattet mit Ankerrührer, Thermometer, Rückflußkühler, Gaseinleitungsrohr und Tropftrichter. Die zur Polymerisation vorgelegten Lösungen wurden mit Stickstoff gespült.

### Beispiel 1

### Darstellung von Allylamino-bis(methylenphosphonsäure)-tetraethylester

Zu einer Mischung aus 15 g (0,5 mol) Paraformaldehyd und 69 g (0,5 mol) Diethylphosphit wurden bei 80°C im Laufe einer halben Stunde 14,3 g (0,25 mol) Allylamin gegeben. Nach einer halben Stunde Nachrühren bei 85°C war die Reaktion beendet. Das Rohprodukt, das 9 % Wasser enthielt, wurde durch Zugabe von Na₂S0₄ getrocknet. Es wurde ohne weitere Reinigung zur Polymerisation eingesetzt. ¹H-NMR (DMSO-d₆): 0 = 1.23 (t, 12H); 3.05 (d, 4H); 3.38 (d, 2H); 4.0 (m, 8H); 5.2 (m, 4H); 5.58-5.95 ppm (m, 1 H).

³¹P-NMR (D₂0): 0 = 27,55 ppm.

### Beispiel 2

### Darstellung von Diallylamino-methylenphosphonsäure-diethylester

Zu einer gut gerührten Mischung aus 138,1 g (1 mol) Diethylphosphit und 97,2 g (1 mol) Diallylamin wurden bei 60 °C langsam 30 g (1 mol) Paraformaldehyd gegeben. Nach 30 Minuten Nachrühren bei 85 °C war die Umsetzung beendet. Das Rohprodukt (ca. 90 % Diallylamino-methylenphosphonsäure-diethylester, 6 % Wasser) kann destillativ gereinigt werden (bp₃₅ mbar = 139-143 °C).

¹H-NMR (DMSO-d₆): 0 = 1.23 (t, 12H); 2.78 (d, 2H); 3.18 (d, 4H); 4.0 (m, 4H); 5.2 (m, 4H); 5.58-5.95 ppm (m, 2H).

³¹P-NMR (CDGl₃): 0 = 25.9 ppm.

### Beispiel 3

### Darstellung von Diallylamino-methan-1,1-diphosphonsäure-tetraethylester

4,85 g (0,05 mol) Diallylamin, 8,9 g (0,06 mol) ortho-Ameisensäureethylester und 13,8 g (0,1 mol) Diethylphosphit wurden unter Zugabe von 0,2 ml Bortrifluoridetherat auf 150°C erhitzt. Im Laufe von etwa 2 Stunden wurde das entstehende Ethanol (8,2 ml) abdestilliert.

Das so erhaltene Rohprodukt wurde nach Aufnehmen in Toluol über Natriumsulfat getrocknet und Toluol im Vakuum entfernt. Anschließend wurde das Produkt durch fraktionierte Vakuumdestillation gereinigt. Es wurden 8,1 g (42 % d. Th.) N,N-Diallylamino-methan-1,1-diphosphonsäure-tetraethylester mit einem Siedepunkt von 118-121 °C (0,04 mbar) erhalten.

³¹P-NMR (D₂0): δ = 19,8 ppm.

### Beispiel 4

### Copolymer aus Acrylsäure und 15 % Allylamino-bis(methylenphosphonsäure)-tetraethylester

7,5 g (0,021 mol) Allylamino-methylen-bis(phosphonsäure-diethylester) nach Beispiel 1 wurden in einer Mischung aus 80 g Wasser und 40 g Isopropanol gelöst und unter Einleiten eines Stickstoffstroms auf 75°C erwärmt. Bei dieser Temperatur wurden synchron aus 2 Tropftrichtern eine Katalysatorlösung, bestehend aus 42,5 g (0,6 mol) Acrylsäure und 1,5 g (NH₄)₂S₂0₈ in 30 g Wasser zugetropft. Nach Beendigung der exothermen Reaktionsphase wurde 4 Stunden bei 80°C nachgerührt. Das resultierende Polymer hatte eine Eigenviskosität K von 22.

### Beispiel 5

Copolymer aus Acrylsäure und Diallylamino-methylenphosphonsäurediethylester 7,5 g (0,030 mol) des destillierten Diallylamino-methylenphosphonsäure-diethylester nach Beispiel 2 wurden wie in Beispiel 4 beschrieben mit 42,5 g (0,6 mol) Acrylsäure copolymerisiert. Das resultierende Polymer hatte eine Eigenviskosität K von 20.

### Beispiel 6

Copolymer aus Acrylsäure und Diallylamino-methylenphosphonsäurediethylester in Gegenwart von HCI

22,5 g (0,091 mol) Diallylamino-methylenphosphonsäure-diethylester (Rohprodukt) nach Beispiel 2 wurden in einer Mischung aus 240 g Wasser und 120 g Isopropanol unter Zugabe von 40 g (0,364 mol) 33 %iger Salzsäure gelöst und unter Durchleiten eines Stickstoffstroms auf 75 °C erwärmt. Bei dieser Temperatur wurden synchron aus 2 Tropftrichtern eine Katalysatorlösung, bestehend aus 4,5 g (NH₄)₂S₂0₈ in 90 g Wasser, und 120 g (1,8 mol) Acrylsäure zugetropft. Nach Beendigung der exothermen Reaktionsphase wurde 2 Stunden bei 80 _{°} C nachgerührt. Das resultierende Polymer hatte eine Eigenviskosität K von 23. Nach Abdestillieren von Isopropanol wurde zur Hydrolyse der Phosphonatester 1 Stunde unter Rückfluß gekocht.

### Beispiel 7

Copolymer aus Acrylsäure und Diallylamino-methan-1,1-diphosphonsäure-tetraethylester

10,0 g (0,026 mol) Diallylamino-methan-1,1-diphosphonsäure-tetraethylester werden, wie in Beispiel 4 beschrieben, mit 40,0 g (0,56 mol) Acrylsäure copolymerisiert.

### Beispiel 8

Copolymer aus Acrylsäure und Diallylamino-methan-1,1-diphosphonsäure-tetraethylester in Gegenwart von HCI

10 g (0,026 mol) Diallylamino-methan-1,1-diphosphonsäure-tetraethylester werden unter Zugabe von 2,89 g (0,026 mol) 33%iger Salzsäure, wie in Beispiel 6 beschrieben, mit 40 g (0,56 mol) Acrylsäure copolymerisiert.

Nach Abdestillieren des Isopropanols wurde zur Hydrolyse der Phosphonatester 1 Stunde unter Rückfluß gekocht.

### Beispiel 9

Copolymer aus 2-Acrylamido-2-methyl-propansulfonsäure und Diallylamino-methylenphosphonsäurediethylester

Ein Drittel einer Monomerenlösung bestehend aus 7,5 g (0,03 mol) Diallylamino-methylenphosphonsäurediethylester und 42,5 g (0,2 mol) 2-Acrylamido-2-methyl-propansulfonsäure in 120 g Wasser wurde im Reaktionskolben vorgelegt und unter Durchleiten eines Stickstoffstroms auf 80 °C erwärmt. Bei dieser Temperatur wurden innerhalb von 2 Stunden synchron der Rest der Monomerenlösung sowie eine Katalysatorlösung bestehend aus 1,5 g (NH₄)₂S₂0₈ in 30 g Wasser zugetropft. Es wurde 2 Stunden unter Rückfluß nachgekocht. Das resultierende Polymer hatte einen K-Wert von 47.

Vergleichsbeispiel 1

Darstellung von Diallylamino-methan-1,1-diphosphonsäure (analog JP-OS-54/135724)

Die Diallylamino-methan-1,1-diphosphonsäure wurde durch Hydrolyse des entsprechenden destillierten Tetraethylesters mit konz. HGI hergestellt.

### Vergleichsbeispiel 2

### Darstellung von Pyrrolidin-1,1-methandiphosphonsäure

71,1 g (1 mol) Pyrrolidin, 170,4 g (1,2 mol) ortho-Ameisensäureethylester und 289,8 g (2,1 mol) Diethylphosphit wurden 4 Stunden lang auf 150°C erhitzt und das sich bildende Ethanol abdestilliert. Anschließend wurden die unumgesetzten Edukte im Hochvakuum destillativ entfernt. 286 g des erhaltenen Biphosphonats wurden mit 1 I konz. Salzsäure 6 Stunden lang unter Rückfluß gehalten. Anschließend wurde die überschüssige Salzsäure im Vakuum entfernt. Es wurden 142 g (58 % d. Th.) Pyrrolidin-1,1-methandiphosphonsäure als farbloses Pulver erhalten. ³¹P-NMR (D₂0): δ = 8,25 ppm

### Vergleichsbeispiel 3

### Copolymer aus Acrylsäure und Diallylamino-methylenphosphonsäure

Die Diallylamino-methylenphosphonsäure wurde durch Umsetzung von Diallylamin mit Formaldehyd und phosphoriger Säure in äquimolaren Mengen dargestellt. (K. Moedritzer, I.I. Irani J. Org. Chem. 1966, 31, 1603-1607). Als Mineralsäure wurde statt Salzsäure Schwefelsäure verwendet, die nach der Reaktion mit Natronlauge neutralisiert wurde. Die Phosphonsäure wurde durch Extraktion des zur Trockne eingeengten Reaktionsansatzes mit Ethanol vom Salz abgetrennt. 10,0 g (0,05 mol) Diallylamino-methylenphosphonsäure wurden mit 40,0 g (0,56 mol) Acrylsäure wie in Beispiel 4 beschrieben copolymerisiert. ³¹P-NMR-spektroskopische Untersuchungen am Diallylamino-monophosphonat Beispiel 2 25,9 ppm Beispiel 6 17,2 ppm, 10,5 ppm, 9,2 ppm; rel.Int. 3:1:0,1 nach 1 h Kochen 17,3 ppm, 10,7 ppm, 9,2 ppm; rel.Int. 3:1:0,3 Vgl.-Bsp.3 8,6 ppm ³¹P-NMR-spektroskopische Untersuchungen am Diallylamino-1,1-diphosphonat Beispiel 3 19,8 ppm Beispiel 7 20,1-20,3 ppm, 14,2-15,5 ppm; rel.lnt. 3:1 Beispiel 8 16,9-17,1 ppm, 16,1-16,3 ppm, 12,9-13,4 ppm, rel.lnt. 2:1:2 Nach 1 h Kochen 8,8 - 9,0 ppm Vgl. Bsp. 1 7,7 ppm Vgl. Bsp.2 8,25 ppm

Diese Messungen deuten auf eine fortschreitende Hydrolyse der Phosphonatester (Beispiele 6,7 und 8) während der Polymerisation und bei der thermischen Nachbehandlung.

## Patentansprüche

1. Alkenylaminoalkylenphosphonsäureester der Formel 1 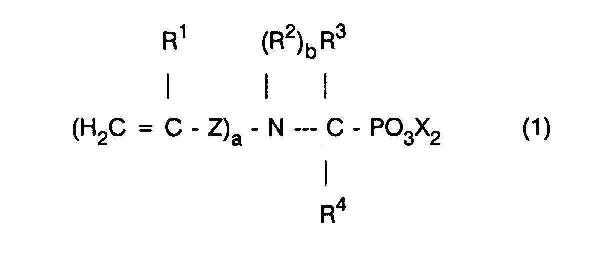
worin
R¹ = Wasserstoff oder Methyl,
R² = Wasserstoff, C₁-C₂₂-Alkyl, bevorzugt C₁-C₆-Alkyl, C₃-C₆-Alkenyl, bevorzugt Propenyl, Aryl, bevorzugt Phenyl oder eine Gruppe der Formeln -C(R3)(R4)-P03X2 und - C(O)R⁵,
R³ = Wasserstoff, C₁-C₂₂-Alkyl, bevorzugt C₁-C₆-Alkyl oder Aryl, bevorzugt Phenyl,
R⁴ = Wasserstoff, C₁-C₂₂-Alkyl, bevorzugt C₁-C₆-Alkyl, Aryl, bevorzugt Phenyl oder eine Gruppe der Formel -P0₃X₂'
R⁵ = C₁-C₂₂-Alkyl, bevorzugt C₁-C₄-Alkyl oder Aryl, bevorzugt Phenyl,
Z = C₁ -C₃-Alkyl,
a = 1 oder 2, b = O oder 1, a + b = 2 und
X = C₁-C₄-Alkyl oder Aryl, bevorzugt Phenyl,
ausgenommen den Verbindungen der Formeln (H2C=CH-CH2)2N-CHR4P03X2 und (H₂C = CH-CH₂)-₂ N-CH [PO₃(C₂H₅)₂]₂.

2. Verfahren zur Herstellung von Monophosphonsäureestern gemäß Anspruch 1, dadurch gekennzeichnet, daß eine Mischung aus Aldehyd oder Keton der Formel R³⁻C(O)-R⁴ (A), Diester der phosphorigen Säure (B) und sekundärem Amin der Formel 3 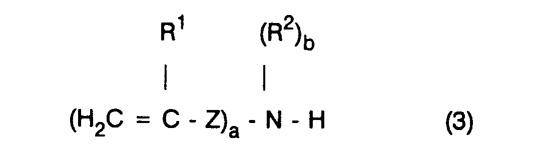
wobei R¹, R², Z, a und b die vorstehend angegebene Bedeutung besitzen, bei Temperaturen im Bereich von 20 bis 200°C umgesetzt werden, wobei die Komponenten A:B:C im Molverhältnis 0,5-1,5:0,5-1,5:1 zu Beginn der Umsetzung in der Mischung vorliegen.

3. Verfahren zur Herstellung von Monophosphonsäureestern gemäß Anspruch 1, dadurch gekennzeichnet, daß eine Mischung aus Aldehyd oder Keton der Formel R³⁻C(O)-R⁴ (A), Diester der phosphorigen Säure (B) und primärem Amin der Formel 3 (D) bei Temperaturen im Bereich von 20 bis 200°C umgesetzt werden, wobei die Komponenten A:B:D im Molverhältnis 1,0-3,0:1,0-3,0:1 zu Beginn der Umsetzung in der Mischung vorliegen.

4. Verfahren zur Herstellung von 1,1-Diphosphonsäureestern gemäß Anspruch 1, dadurch gekennzeichnet, daß eine Mischung aus Diester der phosphorigen Säure (B), Alkylester der ortho-Ameisensäure (E) und primärem oder sekundärem Amin der Formel 3 (D,C) bei Temperaturen im Bereich von 50 bis 150°C umgesetzt werden, wobei die Komponenten B:E:D oder B:E:C im Molverhältnis 1,5-3,0:0,5-2,0:1 zu Beginn der Umsetzung in der Mischung vorliegen.

5. Verfahren zur Herstellung von Copolymeren bestehend aus 0,1- 99,9 Gew.-%, bevorzugt 1 - 50 Gew.- %, mindestens einer Monomer-Einheit der Formel 2 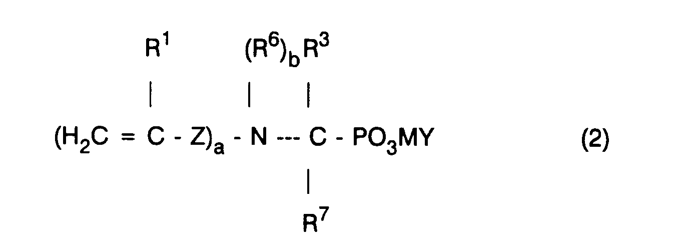
worin
R¹ = Wasserstoff oder Methyl,
R⁶ = Wasserstoff, C₁-C₂₂-Alkyl, bevorzugt Cᵢ-C₆-Alkyl, C₃-C₆-Alkenyl, bevorzugt Propenyl, Aryl, bevorzugt Phenyl oder eine Gruppe der Formeln -C(R³)(R⁴)-PO₃MY und - C(O)R⁵,
R³ = Wasserstoff, C₁ -C₂₂-Alkyl, bevorzugt C₁-C₆-Alkyl oder Aryl, bevorzugt Phenyl,
R⁷ = Wasserstoff, C₁ -C₂₂-Alkyl, bevorzugt Cᵢ-C₆-Alkyl, Aryl, bevorzugt Phenyl oder eine Gruppe der Formel -PO₃MY,
R⁵ = C1-C22-Alkyl, bevorzugt C1-C4-Alkyl oder Aryl, bevorzugt Phenyl,
Z = C₁-C₃-Alkyl,
a = 1 oder 2, b = O oder 1, a + b = 2,
Y = Wasserstoff, C1-C4-Alkyl oder Aryl, bevorzugt Phenyl und
M = unabhängig voneinander Wasserstoff oder ein Kation, vorzugsweise Natrium, Kalium, oder Ammonium bedeuten
und
99,9 - 0,1 Gew.-%, bevorzugt 99 - 50 Gew.-% mindestens einer Monomer-Einheit aus der Gruppe der ethylenisch ungesättigten Carbonsäuren, Sulfonsäuren und deren Derivaten sowie anderen ethylenisch ungesättigten Verbindungen, dadurch gekennzeichnet, daß man Alkenylaminoalkylenphosphonsäureester der Formel 1 und Monomere aus der Gruppe der ethylenisch ungesättigten Carbonsäuren, Sulfonsäuren und deren Derivaten sowie anderer ethylenisch ungesättigter Verbindungen in wäßrigem Medium oder organischem Medium bei einem pH-Wert kleiner 5 polymerisiert und gegebenenfalls die verbleibenden Phosphonsäureestergruppen der erhaltenen Copolymere hydrolysiert.

6. Verfahren nach Anspruch 5, dadurch gekennzeichnet, daß die Lösungspolymerisation in einem Gemisch aus Wasser und/oder organischen Lösungsmitteln in Gegenwart eines radikalbildenden Initiators, unter Zusatz von äquimolaren Mengen an Mineralsäure, bei einer Temperatur zwischen 0 und 120_{°}C, bevorzugt zwischen 10 und 100°C und einer Gesamtmonomerkonzentration von 1-80 Gew.-%, bevorzugt 10-60 Gew.-% stafflindet.

7. Verfahren nach Anspruch 5 oder 6, dadurch gekennzeichnet, daß Verbindungen der Formel 1 und ethylenisch ungesättigte Carbonsäuren und/oder Sulfonsäuren in einem Gemisch aus Wasser und organischem Lösungsmittel, gegebenenfalls unter Zusatz von Mineralsäuren, in Gegenwart eines radikalbildenden Initiators copolymerisiert werden und gegebenenfalls anschließend die verbleibenden Phosphonsäureestergruppen der erhaltenen Copolymere durch Erhitzen in stark mineralsaurer Lösung hydrolysiert werden.

8. Verfahren nach Anspruch 5 oder 6, dadurch gekennzeichnet, daß öllösliche Verbindungen der Formel 1 mit oleophilen ethylenisch ungesättigten Verbindungen in organischen Lösungsmitteln mit Radikalkettenstartern copolymerisiert werden und anschließend die verbleibenden Phosphonsäureestergruppen der erhaltenen Copolymere durch Zugabe von Mineralsäuren bei einem pH-Wert kleiner 5 hydrolysiert werden.

9. Verfahren nach einem der Ansprüche 5 bis 8, dadurch gekennzeichnet, daß die verbleibenden Phosphonsäureestergruppen der erhaltenen Copolymere durch Zugabe von Phosphonsäuregruppen enthaltenden Copolymeren unter Zusatz von Wasser und unter Abdestillieren des sich bildenden Alkohols hydrolysiert werden.

10. Verwendung der nach einem der Ansprüche 5 bis 8 hergestellten Copolymeren als Steinverhinderer in der Maschinenreinigung, Flaschenreinigung, Dampfproduktion, Kühlwasserbehandlung und bei der Erdölförderung, als Komplexer- und/oder Sequestiermittel bei der Wasseraufbereitung, bei der Lederherstellung und in der Textil- und Papierbleiche und als Builder und Cobuilder in Waschmitteln.
